(19) Europäisches Patentamt / European Patent Office / Office européen des brevets

(11) **EP 4 377 557 B1**

(12) **EUROPEAN PATENT SPECIFICATION**

(45) Date of publication and mention
of the grant of the patent:
**16.04.2025  Bulletin 2025/16**

(21) Application number: **22747793.2**

(22) Date of filing: **27.07.2022**

(51) International Patent Classification (IPC):
*F01D 25/12* (2006.01)      *F01D 25/18* (2006.01)
*F02C 6/12* (2006.01)       *F02C 7/16* (2006.01)

(52) Cooperative Patent Classification (CPC):
**F01D 25/125; F01D 25/183; F02C 6/12; F02C 7/06;**
F05D 2220/40; F05D 2240/128; F05D 2240/52;
F05D 2240/54; F05D 2240/55; F05D 2260/232;
F05D 2260/98; Y02T 10/12

(86) International application number:
**PCT/IB2022/056942**

(87) International publication number:
**WO 2023/007396 (02.02.2023 Gazette 2023/05)**

(54) **TURBOMACHINE WITH COOLING AND LUBRICATION SYSTEM USING LUBRICATION OIL**

TURBOMASCHINE MIT KÜHL- UND SCHMIERSYSTEM UNTER VERWENDUNG VON
SCHMIERÖL

TURBOMACHINE AVEC SYSTÈME DE REFROIDISSEMENT ET DE LUBRIFICATION UTILISANT
DE L'HUILE DE LUBRIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2021  IT 202100020378**

(43) Date of publication of application:
**05.06.2024  Bulletin 2024/23**

(73) Proprietor: **Dumarey Automotive Italia S.p.A.
10129 Torino (IT)**

(72) Inventors:
 • **BUZZI, Luca
   10129 Torino (IT)**
 • **DI GENNARO, Luigi
   10129 Torino (IT)**
 • **RUSSO, Carmine
   10129 Torino (IT)**

(74) Representative: **Bruni, Giovanni
   Laforgia, Bruni & Partners
   Corso Duca degli Abruzzi, 2
   10128 Torino (IT)**

(56) References cited:
EP-A- 2 743 460      EP-A1- 3 073 135
EP-A1- 3 369 909     CN-A- 107 869 364
DE-A1- 3 923 239     DE-A1- 4 330 380
US-A1- 2010 284 824

# Description

## Field of the invention

The present invention relates to a turbomachine equipped with an innovative cooling and lubrication system. More specifically, the cooling and lubrication system is based on oil jets and is particularly suitable for turbochargers of internal combustion engines.

## Background art

As is known, turbomachines are machines in which the exchange of energy with the fluid takes place thanks to the rotation of a wheel, also known as a rotor or impeller, splined to a shaft, equipped at the periphery with blades, and housed in a case (known as a stator) which may also be equipped with blades.

In the context of turbomachinery, the turbocharger (or turbo-unit or, more simply, turbo) has as its main purpose the supercharging of the internal combustion engine. The turbocharger is defined by the coupling of a centripetal turbine and a centrifugal compressor. The turbine constitutes the 'hot' or exhaust side of the turbo-compressor, where the high temperature exhaust gases are received, while the centrifugal compressor is the 'cold' or intake side, where the air to be compressed is drawn in. It constitutes the most common method of turbocharging endothermic engines, particularly those for motor vehicles.

The temperatures reached on the hot side of the turbocharger, related to the high enthalpy of the exhaust gases, are of the order of several hundred degrees Celsius and require reliable cooling systems that remove heat from the components subjected to these high temperatures, especially the sealing media on the turbine side.

The cooling of the most critical areas of a turbocharger's core body is done indirectly by circulating only the lubrication oil intended to support the bearing load, which at the same time also removes the necessary heat. Cooling can also occur through a combination of oil circulation and water circulation, the latter in a dedicated circuit. The adoption of the water circuit usually applies to compression-ignition and spark-ignition engines where combustion conditions involve exhaust gas temperatures so high that the structural strength of the mechanical components is compromised.

The adoption of a water-cooling circuit is necessary not only during the operating conditions of the internal combustion engine, but also immediately after it has been switched off. In fact, once the endothermic engine is switched off, the turbine transmits a heat wave to the entire turbocharger casing inside which, in the meantime, no more oil circulates. This creates excessive overheating of the bearings and especially the turbine seals. The use of the water-cooling circuit is effective because water has the advantage over oil that, due to the thermosiphon effect, it continues to circulate even after the internal combustion engine is switched off and thus continues its heat-removal function.

On the other hand, the addition of water circulation entails a considerable complication in the design of the turbocharger, in particular in the design of the central body, and an increase in costs for tooling and layout of the water channels. In addition, the piping required to bring water to the turbocharger also represents a non-negligible cost.

There is therefore a need to solve the technical problem mentioned above by means of an innovative solution that avoids the use of a specific water cooling circuit to cool the turbocharger even in the highest performance engine applications.

Turbomachines having seal systems cooled by sprayed lubrication oil are disclosed for example in documents EP 2 743 460 and EP 3 073 135.

## Summary of the Invention

The aim of the present invention is to realize a turbo-machine equipped with a cooling and lubrication system which does not require the adoption of a water-cooling circuit.

More specifically, the cooling and lubrication system according to the present invention is dedicated to the most critical areas of the central body of a turbocharger - bearing unit and sealing means - and is based on a suitable oil sprayer with well-defined and optimized dimensioning and positioning.

Accordingly, according to an aspect of the present invention a turbomachine is provided having a cooling and lubrication system having the characteristics set forth in claim 1.

Further preferred and/or particularly advantageous embodiments of the invention are described according to the features set forth in the dependent claims.

## Brief Description of the Drawings

The invention will now be described with reference to the appended drawings, which illustrate a non-limiting example embodiment, wherein:

- Figure 1 schematically illustrates the cooling and lubrication system of a turbomachinery according to a first embodiment of the present invention,
- Figure 2 schematically illustrates the cooling and lubrication system in a second embodiment of the present invention,
- Figure 3 schematically illustrates the cooling and lubrication system in a third embodiment of the present invention, and
- Figure 4 is a detail, in enlargement and with parts removed for clarity, of the forms of implementation referred to in Figures 1 to 3.

## Detailed Description

As already mentioned, the present invention is a turbo-machine and, in particular, a turbocharger for turbocharging high-performance endothermic engines, in which the cooling of the turbocharger is, according to known technique, also entrusted to a water circuit in addition to the lubrication oil. However, the present invention is any type of turbo-machine in which the use of a water cooling circuit is to be avoided.

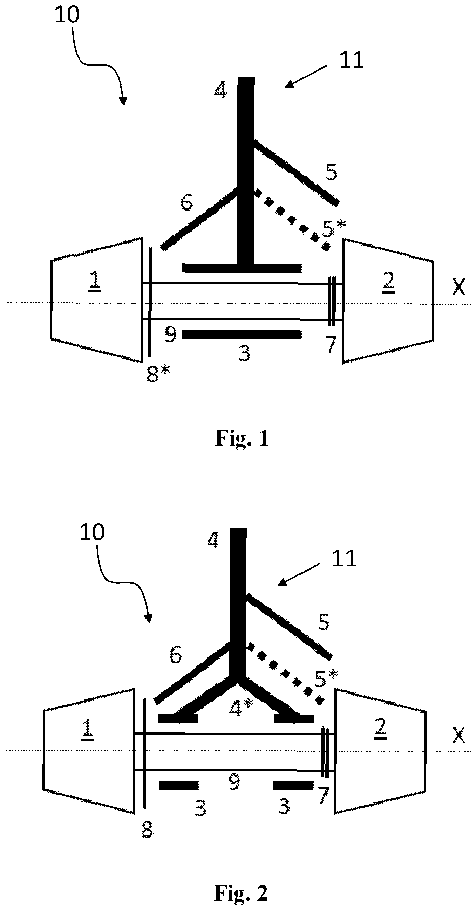

With reference to Figure 1, denotes a turbomachine 10 for endothermic engines of a known type, schematically shown in its essential components. In particular, the turbomachine 10 may have an axisymmetric geometry about an axis of rotation X and comprises:

- a compressor 1 provided with a relative impeller, for compressing the air supply of the endothermic engine (or other suitable fluid), when the air to be compressed has been sucked in,
- a turbine 2 equipped with its turbine wheel, for the expansion of the exhaust gases of the endothermic engine,
- a rotatable shaft 9 connecting the turbine and the compressor,
- support means 3, 3*, 8, 8* of shaft 9. A semi-floating plain bearing 3 in which the floating ring does not rotate and a thrust ring 8* is schematically shown in figure 1,
- sealing means 7, on the turbine 2 side to seal the lubrication oil to the turbine 2 impeller and prevent the hot gases of the endothermic engine from escaping from the "hot" side of the turbocharger, i.e. the turbine 2 wheel,
- a cooling 11 and lubrication system of the turbomachine 10.

According to the invention, the cooling 11 and lubrication system is realized within the central body of the turbocharger (of a known type and for this reason not shown in the diagrams of Figures 1-4) and comprises:

- a main oil supply channel 4 (also used for lubrication of the turbocharger, as well as for its cooling). The main channel 4, as schematized in figure 1, can deliver a flow of oil to the semi-floating plain bearing 3 directly or by means of further channels not shown for simplicity,
- a branch 6 which takes some of the oil flow from the main channel 4 and adds it to the thrust ring 8*. In this configuration, the thrust ring 8* could also be integrated into the semi-floating plain bearing 3,
- at least one spray-channel 5, 5* for cooling the sealing media 7. The spray-channel 5, 5*, the position or number of which may vary depending on the application and is illustrated in Figure 1 in two exemplary positions, draws a flow of oil, directly or indirectly, from the main channel 4, to which it is connected, and terminates with a spray nozzle 5a whose diameter $\phi 5$ and distance d from the sealing means 7 are predetermined as will be better described below. The spray nozzle 5a is therefore in the distal position of spray-channel 5, 5* respect to the main channel 4.

With reference to Figure 2, the turbomachine 10 differs in that the support means comprise a pair of floating plain bearings 3 (in which, that is, the corresponding floating rings rotate) and a thrust ring 8.

According to the invention, the cooling 11 and lubrication system implemented within the turbomachine 10 body comprises:

- a main oil supply channel 4 (also serving to lubricate the turbocharger, as well as to cool it). The main channel 4 delivers a flow of oil to the floating plain bearings 3 by means of further channels 4*,
- a branch 6 which takes a part of the oil flow of the main channel 4 and feeds it to the thrust ring 8,
- at least one spray-channel 5, 5* for cooling the sealing means 7.

The spray-channel 5, 5*, the position or number of which may vary depending on the application and in Figure 2 is illustrated as an example in two positions, draws a flow of oil, directly or indirectly, from the main channel 4, to which it is connected, and terminates with a spray nozzle 5a whose diameter $\phi 5$ and distance d from the sealing means 7 are predetermined. Also in this example of implementation, the spray nozzle is located at the distal position of the spray-channel 5, 5* respect to the main channel 4.

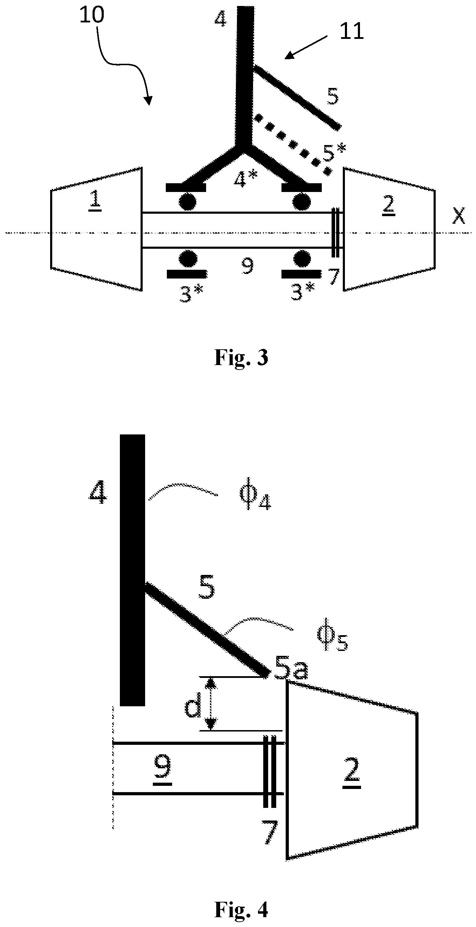

With reference to figure 3, turbomachine 10 differs in that the bearings comprise a pair of rolling bearings 3* capable of supporting radial and axial loads. For this reason, the turbocharger in this configuration does not require thrust rings. Of course, if rolling bearings capable of withstanding only radial loads were to be used, a thrust ring would also have to be provided, but this form of implementation will also be covered by the present invention.

According to the invention, the turbomachine cooling 11 and lubrication system implemented within the turbocharger body comprises:

- a main oil supply channel 4 (also serving the lubrication of the turbocharger, as well as its cooling). The main channel 4 delivers a flow of oil to the rolling bearings 3* by means of further channels 4*,
- at least one spray-channel 5, 5* for cooling the sealing means 7. The spray-channel 5, 5*, the position or number of which may vary depending on the application and in Figure 3 is illustrated as an example in two positions, draws a flow of oil, directly or indirectly, from the main channel 4, to which it is connected, and terminates with a spray nozzle 5a

whose diameter $\phi5$ and distance d from the sealing means 7 are predetermined. Also, in this example of implementation, the spray nozzle is located at the distal position of the spray-channel 5, 5* respect to the main channel 4.

According to the present invention, the spray-channel 5, 5* is realized in the turbomachine central body 10. The spray-channel is suitably oriented so as to direct the oil jet towards the oil sealing means 7 from the turbine side 2, without, however, directly hitting them, and is fed by a flow spill from the main oil supply channel 4 of the turbocharger or from the further oil channels 4* for the bearings 3, 3*. Preferably, the spray-channel 5-5* can work with oil pressures within 10 bar.

It is evident that the embodiments of the invention, described above, represent non-limiting examples: in particular, the type, arrangement and load carrying capacities of the bearings presented are not intended to limit the invention to the examples described, any architecture of turbocharger shaft support elements may be adopted within the same inventive concept.

With reference to Figure 4, it should be noted that it is important for the purposes of the present invention to dimension the spray-channel 5, 5* both with regard to its diameter $\phi5$ which will determine the flow rate of oil tapped from the main channel 4, and with regard to the distance from the sealing means 7, which will determine the effectiveness of heat removal by the flow rate of oil tapped from the spray-channel.

Regarding the diameter $\phi5$ of spray-channel 5, 5*, it must be related to diameter $\phi4$ of the main channel 4. Advantageously, the effectiveness of the solution is achieved if diameter $\phi5$ of spray-channel 5, 5* is between 10% and 25% of diameter $\phi4$ of the main channel 4. Since the diameter $\phi4$ of main channel 4, in high-performance endothermic engine applications, takes values between 5 mm and 6 mm, an optimal range for diameter sizing $\phi5$ of the spray-channel 5, 5* will be between 0.7 mm and 1.3 mm. Percentage values of $\phi5/\phi4$ lower than 10% would make the realisation of the spray-channel 5, 5* technologically complex or even unfeasible, while percentage values of $\phi5/\phi4$ greater than 25% would create excessive oil bleed in the spray-channel which would be to the detriment of the lubrication of the turbocharger shaft bearings.

The distance d of the end portion of the spray-channel 5, 5*, i.e., of the spray nozzle 5a, from the sealing means 7 is another important parameter for the correct dimensioning of the cooling system 11: with a very small distance there is a risk that the oil will directly and at high speed invade the sealing means 7, impairing their very functionality.

On the contrary, oil must never be directed onto the sealing rings while being sprayed in an area facing them. Preferably, it would be useful to protect the area of the sealing means from any direct contact with the lubrication oil by means of a suitable deflector, which can be made from the same casting as the turbine body. Conversely, an excessive distance would make the heat removal function of the sealing media 7 ineffective. It is therefore advisable, depending on the application, to relate the distance d to the diameter $\phi5$ of the spray-channel 5, 5*. According to the invention, a suitable range, confirmed by calculation and experimental tests, is as follows:

$$5\ \phi5 < d < 12\ \phi5$$

with the distance d between spray nozzle 5a and turbine-side sealing medium 7 between five and twelve times the diameter $\phi5$ of the spray channel 5, 5*.

The adoption of the channel-sprayer makes it possible to achieve cooling of the most critical areas (oil seal media on the turbine side) comparable to the indirect cooling obtainable with water circulation.

In other words, this solution allows the use of a water-cooling circuit to be avoided where possible, by retaining the entire cooling of the turbomachine to the lubrication oil alone. This is certainly advantageous from an economic point of view, but not only:

- many of today's engine architectures require the turbo to be located in the upper portion of the engine compartment. This does away with the thermosiphon effect mentioned in the introduction and also eliminates the residual advantage of using water cooling;

- oil cooling, according to the present invention, allows the heat wave (which occurs when the engine is switched off) to start from lower temperatures, so that the temperature limits are not exceeded. Thus, with this type of cooling, the same principle is used as with water cooling, making the latter no longer necessary.

In addition to the form of the invention as described above, it must be understood that there are numerous other variants. It must also be understood that these forms of embodiment are merely illustrative and do not limit either the scope of the invention, its applications or its possible configurations. On the contrary, although the above description allows the skilled person to implement the present invention at least according to one exemplary form of embodiment thereof, it should be understood that many variations of the described components are possible, without thereby departing from the scope of the invention as defined in the appended claims.

## Claims

1. Turbomachine (10) comprising:

    - a turbine (2) provided with a turbine wheel,
    - a compressor (1),

- a shaft (9), rotatable, connecting the turbine (2) and the compressor (1),
- support means (3, 3*, 8, 8*) of the shaft (9),
- a cooling and lubrication system (11) exclusively based on heat removal by lubricating oil, which system (11) includes a main channel (4) for feeding the lubricating oil to the support means (3, 3*, 8, 8*) of the shaft (9),
- sealing means (7) on the turbine side, configured to avoid lubricating oil entering the turbine wheel,
wherein
- the cooling and lubrication system (11) comprises at least one spray-channel (5, 5*) for cooling the sealing means (7), fluid-dynamically connected to the main channel (4) and able to supply a flow of lubricating oil fed directly or indirectly, from the main channel (4);
- the spray-channel (5, 5*) is provided, in a distal position with respect to the main channel (4), with a spray nozzle (5a) facing the sealing means (7),

the turbomachine (10) being **characterized by** the fact that a distance (d) of the spray nozzle (5a) from the sealing means (7) is between five and twelve times the diameter ($\phi$5) of the spray-channel (5, 5*).

2. Turbomachine (10) according to claim 1, wherein a diameter ($\phi$5) of the spray-channel (5, 5*) is between 10% and 25% of a diameter ($\phi$4) of the main channel (4).

3. Turbomachine (10) according to claim 2, wherein for values of the diameter ($\phi$4) of the main channel (4) between 5 mm and 6 mm, corresponding values of the diameter ($\phi$5) of the spray-channel (5, 5*) are between 0.7 mm and 1.3 mm.

4. Turbomachine (10) according to claim 3, comprising a body provided with a deflector, which is made from the same casting as the turbomachine body and is designed to protect sealing means (7) from direct contact with the lubricating oil.

5. Turbomachine (10) according to any of the preceding claims, in which there is a branch (6) fluid-dynamically connected to the main channel (4), containing a lubricating oil flow coming from the main channel (4) and fed to a thrust ring (8, 8*), which belongs to the support means of the shaft (9).

6. Turbomachine (10) according to claim 5, in which the main channel (4) is provided with further channels (4*) for supplying lubricating oil to floating plain bearings (3), which belong to the support means of the shaft (9).

7. Turbomachine (10) according to one of claims 1 to 3, in which the main channel (4) is provided with further channels (4*) for supplying lubricating oil to rolling bearings (3*) which belong to the support means of the shaft (9).

8. Turbomachine (10) according to any of the preceding claims, in which inside the spray-channel (5, 5*), the lubricating oil pressure assumes values not exceeding 10 bar.

**Patentansprüche**

1. Turbomaschine (10) mit:

- einer Turbine (2), die mit einem Turbinenrad versehen ist
- einem Kompressor (1),
- einer Welle (9), die drehbar ist und die Turbine (2) und den Kompressor (1) verbindet,
- Stützmitteln (3, 3*, 8, 8*) der Welle (9),
- einem Kühl- und Schmiersystem (11), das ausschließlich auf Wärmeabfuhr durch Schmieröl basiert, wobei das System (11) einen Hauptkanal (4) zur Zufuhr des Schmieröls zu den Stützmitteln (3, 3*, 8, 8*) der Welle (9) umfasst,
- Dichtungsmittel (7) auf der Turbinenseite, die so konfiguriert sind, dass sie verhindern, dass Schmieröl in das Turbinenrad eindringt,
wobei
- das Kühl- und Schmiersystem (11) mindestens einen Sprühkanal (5, 5*) zur Kühlung der Dichtungsmittel (7) umfasst, der fluiddynamisch mit dem Hauptkanal (4) verbunden ist und einen Schmierölstrom liefern kann, der dem Hauptkanal (4) zugeführt wird direkt oder indirekt vom Hauptkanal (4);
- der Sprühkanal (5, 5*) ist in einer distalen Position in Bezug auf den Hauptkanal (4) mit einer Sprühdüse (Sa) versehen, die dem Dichtungsmittel (7) zugewandt ist,

wobei die Turbomaschine (10) **dadurch gekennzeichnet ist, dass** ein Abstand (d) der Sprühdüse (5a) vom Dichtungsmittel (7) zwischen dem Fünf- und Zwölffachen des Durchmessers ($\phi$5) des Sprühkanals (5, 5*) beträgt.

2. Turbomaschine (10) nach Anspruch 1, wobei ein Durchmesser ($\phi$5) des Sprühkanals (5, 5*) zwischen 10 % und 25 % eines Durchmessers ($\phi$4) des Hauptkanals (4) beträgt.

3. Turbomaschine (10) nach Anspruch 2, wobei für Werte des Durchmessers ($\phi$4) des Hauptkanals (4) zwischen 5 mm und 6 mm entsprechende Werte des Durchmessers ($\phi$5) des Sprühkanals (5, 5*) zwischen 0,7 mm und 1,3 mm liegen.

**4.** Turbomaschine (10) nach Anspruch 3, umfassend einen mit einem Deflektor versehenen Körper, der aus demselben Gussteil wie der Turbomaschinenkörper hergestellt ist und dazu bestimmt ist, Dichtungsmittel (7) vor direktem Kontakt mit dem Schmieröl zu schützen.

**5.** Turbomaschine (10) nach einem der vorhergehenden Ansprüche, bei der ein strömungstechnisch mit dem Hauptkanal (4) verbundener Abzweig (6) vorhanden ist, der einen Schmierölstrom enthält, der vom Hauptkanal (4) kommt und einem Anlaufring (8, 8*) zugeführt wird, der zu den Lagermitteln der Welle (9) gehört.

**6.** Turbomaschine (10) nach Anspruch 5, bei der der Hauptkanal (4) mit weiteren Kanälen (4*) zur Schmierölversorgung von schwimmenden Gleitlagern (3) versehen ist, die zu den Lagermitteln der Welle (9) gehören.

**7.** Turbomaschine (10) nach einem der Ansprüche 1 bis 3, bei der der Hauptkanal (4) mit weiteren Kanälen (4*) zur Schmierölversorgung von Wälzlagern (3*) versehen ist, die zur Lagerung der Welle (9) gehören.

**8.** Turbomaschine (10) nach einem der vorhergehenden Ansprüche, bei der innerhalb des Sprühkanals (5, 5*) der Schmieröldruck Werte von höchstens 10 bar annimmt.

**Revendications**

**1.** Turbomachine (10) comprenant:

- une turbine (2) munie d'une turbine
- un compresseur (1),
- un arbre (9), rotatif, reliant la turbine (2) et le compresseur (1),
- des moyens de support (3, 3*, 8, 8*) de l'arbre (9),
- un système de refroidissement et de lubrification (11) exclusivement basé sur l'évacuation de chaleur par huile de lubrification, lequel système (11) comprend un canal principal (4) pour alimenter l'huile de lubrification vers les moyens de support (3, 3*, 8, 8*) de l'arbre (9),
- des moyens d'étanchéité (7) côté turbine, configurés pour éviter que de l'huile de lubrification ne pénètre dans la roue de turbine, dans laquelle
- le système de refroidissement et de lubrification (11) comprend au moins un canal de pulvérisation (5, 5*) pour refroidir les moyens d'étanchéité (7), relié de manière fluidique au canal principal (4) et apte à fournir un flux d'huile de lubrification alimenté directement ou indirectement, à partir du canal principal (4) ;
- le canal de pulvérisation (5, 5*) est pourvu, en position distale par rapport au canal principal (4), d'une buse de pulvérisation (Sa) en regard du moyen d'étanchéité (7),

la turbomachine (10) étant **caractérisée par le fait qu'**une distance (d) de la buse de pulvérisation (5a) au moyen d'étanchéité (7) est comprise entre cinq et douze fois le diamètre ($\phi$5) du canal de pulvérisation (5, 5*).

**2.** Turbomachine (10) selon la revendication 1, dans laquelle un diamètre ($\phi$5) du canal de pulvérisation (5, 5*) est compris entre 10 % et 25 % d'un diamètre ($\phi$4) du canal principal (4).

**3.** Turbomachine (10) selon la revendication 2, dans laquelle pour des valeurs du diamètre ($\phi$4) du canal principal (4) comprises entre 5 mm et 6 mm, des valeurs correspondantes du diamètre ($\phi$5) du canal de pulvérisation (5, 5*) sont comprises entre 0,7 mm et 1,3 mm.

**4.** Turbomachine (10) selon la revendication 3, comprenant un corps pourvu d'un déflecteur, qui est réalisé dans la même pièce moulée que le corps de la turbomachine et est conçu pour protéger les moyens d'étanchéité (7) du contact direct avec l'huile de lubrification.

**5.** Turbomachine (10) selon l'une quelconque des revendications précédentes, dans laquelle il existe une dérivation (6) en liaison fluidique avec le canal principal (4), contenant un flux d'huile lubrifiante provenant du canal principal (4) et acheminé vers une bague de butée (8, 8*), qui appartient aux moyens de support de l'arbre (9).

**6.** Turbomachine (10) selon la revendication 5, dans laquelle le canal principal (4) est pourvu d'autres canaux (4*) pour alimenter en huile lubrifiante des paliers lisses flottants (3), qui appartiennent aux moyens de support de l'arbre (9).

**7.** Turbomachine (10) selon l'une des revendications 1 à 3, dans laquelle le canal principal (4) est pourvu d'autres canaux (4*) pour l'alimentation en huile de lubrification de paliers à roulement (3*) appartenant aux moyens de support de l'arbre (9).

**8.** Turbomachine (10) selon l'une quelconque des revendications précédentes, dans laquelle à l'intérieur du canal de pulvérisation (5, 5*), la pression d'huile de lubrification prend des valeurs ne dépassant pas

10 bars.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2743460 A
- EP 3073135 A